Europäisches Patentamt

European Patent Office

Office européen des brevets

(19)

(11) Veröffentlichungsnummer: **0 179 266**
**A1**

## (12) EUROPÄISCHE PATENTANMELDUNG

(21) Anmeldenummer: 85111661.6

(22) Anmeldetag: 16.09.85

(51) Int. Cl.⁴: **C07F 7/22**

(30) Priorität: 28.09.84 DE 3435717

(43) Veröffentlichungstag der Anmeldung:
30.04.86 Patentblatt 86/18

(84) Benannte Vertragsstaaten:
AT BE CH DE FR GB IT LI LU NL SE

(71) Anmelder: CHEMIE LINZ AKTIENGESELLSCHAFT
St. Peter-Strasse 25
A-4020 Linz(AT)
Anmelder: Lentia Gesellschaft mit beschränkter Haftung
Arabellastrasse 4 Postfach 81 05 08
D-8000 München 81(DE)

(72) Erfinder: Farnleitner, Lorenz, Dilp. Ing., Dr.
Binderlandweg 19
A-4020 Linz(AT)
Erfinder: Kittl, Walter, Mag. Dr.
Boschweg 1a
A-4020 Linz(AT)
Erfinder: Raml, Walter, Dr.

A-4202 Hellmonsödt 246(AT)

(54) Verfahren zur Herstellung von Tricyclohexylzinnhydroxid.

(57) Verfahren zur Herstellung von hochreinem Tricyclohexylzinnhydroxid durch Verseifen von technischem Tricyclohexylzinnhalogenid mit Alkalihydroxid in Methanol, abtrennen des
vorhandenen Feststoffes in der Hitze und Ausfällen des in
Lösung befindlichen Tricyclohexylzinnhydroxids mit Wasser.

EP 0 179 266 A1

Verfahren zur Herstellung von Tricyclohexylzinnhydroxid

Die Anmeldung betrifft ein Verfahren zur Herstellung von Tricyclohexylzinnhydroxid aus technischen Tricyclohexylzinnhalogeniden.

Tricyclohexylzinnhalogenide, meist hergestellt durch Grignard-Reaktion aus Zinntetrahalogenid und Cyclohexylmagnesiumhalogenid, beispielsweise nach AT-PS 263.809, oder aus Dicyclohexylzinndihalogenid und Cyclohexylmagnesiumhalogenid, beispielsweise nach AT-PS 257.636, enthalten als Nebenprodukte vor allem Dicyclohexylzinnhalogenid und Tetracyclohexylzinn.

Es hat nicht an Versuchen gefehlt, die Bildung dieser Nebenprodukte zu verhindern bzw. gering zu halten. So wird schon in AT-PS 275.551 vorgeschlagen, Tricyclohexylzinnchlorid nach der Grignard-Reaktion nicht zu isolieren, da die Destillation sehr lange dauert, wodurch eine Produktverschlechterung eintritt, sondern das Reaktionsgemisch, enthaltend Tricyclohexylzinnchlorid, Xylol und Tetrahydrofuran, mit wäßrigem Alkali zu erhitzen, aus der heißen organischen Lösung von gebildetem Dicyclohexylzinnoxid abzufiltrieren und Tricyclohexylzinnhydroxid durch Abkühlen auf 0 - 10°C in 67 %iger Ausbeute und in einer Reinheit von 99,7 % auszukristallisieren.

Es zeigte sich allerdings, daß die damals zur Verfügung stehenden Analysenmethoden zwar anzeigen konnten, daß keine Chlorverbindung mehr vorhanden ist, daß jedoch aus der Zinn-Elementaranalyse und der Wasserbestimmung nach Karl Fischer nicht auf den Gehalt an den Nebenprodukten Dicyclohexylzinnoxid und Tetracyclohexylzinn geschlossen werden konnte, sondern daß diese trotz Filtration der organischen Schicht im Endprodukt vorhanden sind.

Nach DE-OS 2713049 ist es ebenfalls nicht notwendig, Tricyclohexylzinnchlorid zu isolieren, sondern es kann nach Abdampfen eines Großteils des Tetrahydrofurans das Reaktionsgemisch, bestehend aus einer Lösung von Tricyclohexylzinnchlorid in Xylol, mit wäßrigem Alkali erhitzt und das Tricyclohexylzinnhydroxid nach Verdampfen des organischen Lösungsmittels gewonnen werden. Die dort angegebenen Analysendaten zeigen allerdings den beträchtlichen Anteil an Di- und Tetracyclohexylzinnverbindung, über dessen Abtrennungsmöglichkeit nichts ausgesagt ist.

Nach DE-OS 3023149 kann ebenfalls ohne Isolierung des Tricyclohexylzinnchlorids hochreines Tricyclohexylzinnhydroxid gewonnen werden. Bei diesem Verfahren ist die Herstellung des Tricyclohexylzinnchlorids jedoch sehr aufwendig, da Grignard-Reagens zweimal dem Zinntetrachlorid zugegeben und zwischendurch durch Azeotropdestillation getrocknet werden muß, es wird also die entscheidende Grignard-Reaktion zweimal durchgeführt. Die Ausbeute beträgt zwar 95 % d.Theorie, bezogen auf eingesetztes Zinntetrahalogenid, unter Berücksichtigung des Wirkstoffgehaltes sind dies 92 % Ausbeute. Wegen des großen Grignard-Überschusses beträgt die Ausbeute, bezogen auf eingesetzte Grignard-Verbindung jedoch nur 78 % der Theorie. Für die Verseifung selbst mit wäßrigem Alkali im Lösungsmittelgemisch Toluol/Tetrahydrofuran ist kein zusätzlicher Reinigungseffekt angegeben.

Da also Tricyclohexylzinnhalogenid, hergestellt nach welchem Verfahren auch immer, einen mehr oder minder großen Anteil an Dicyclohexylzinndihalogenid, der bei Verseifen zu Dicyclohexylzinnoxid wird, und an Tetracyclohexylzinn enthält, und da die Reinheitsanforderungen für chemische Produkte ständig steigen, besteht Bedarf, das verunreinigte Tricyclohexylzinnhalogenid so in Tricyclohexylzinnhydroxid umzuwandeln, daß dabei gleichzeitig der Gehalt an unerwünschten Nebenprodukten verringert wird, ohne die Ausbeute an Endprodukt zu schmälern.

Unerwarteterweise konnte ein einfaches Verfahren zur Herstellung von reinem Tricyclohexylzinnhydroxid durch Verseifen von Tricyclohexylzinnhalogenid, das als unerwünschte Nebenprodukte Dicyclohexylzinnhalogenid und Tetracyclohexylzinn enthält, gefunden werden, bei dem die Verseifung in Methanol durchgeführt und die Nebenprodukte in der Hitze abgetrennt werden, worauf das reine Tricyclohexylzinnhydroxid durch quantitatives Ausfällen mit Wasser gewonnen wird. Es erfolgt dabei kein Umkristallisieren mit Ausbeuteverlust.

Gegenstand der vorliegenden Erfindung ist demnach ein Verfahren zur Herstellung von hochreinem Tricyclohexylzinnhydroxid durch Verseifen von technischem Tricyclohexylzinnhalogenid, das dadurch gekennzeichnet ist, daß das technische Tricyclohexylzinnhalogenid in Methanol suspendiert und 1 bis 10 Stunden mit gegebenenfalls wäßrigem Alkalihydroxid erwärmt wird, worauf von vorhandenem Feststoff in der Hitze abfiltriert und das in Lösung befindliche Tricyclohexylzinnhydroxid mit Wasser ausgefällt und anschließend in üblicher Weise isoliert wird.

Als technische Tricyclohexylzinnhalogenide werden solche bezeichnet, die einen gewissen Anteil an Dicyclohexylzinndihalogenid und an Tetracyclohexylzinn, üblicherweise je bis zu 10 Gew.%, besitzen. Halogenid bedeutet Chlorid oder Bromid, insbesondere Chlorid. Die verwendeten technischen Tricyclohexylzinnhalogenide können auf verschiedene Weise hergestellt werden, einige Herstellungsverfahren sind zum Stand der Technik beispielhaft angeführt.

Zur Durchführung des Verfahrens wid das technische Tricyclohexylzinnhalogenid etwa in 2 bis 10 Gew.Teilen, bevorzugt in 2 bis 5 Gew.Teilen Methanol suspendiert und mit Alkalihydroxid, üblicherweise mit Natriumhydroxid, versetzt. Die zur Verseifung notwendige Menge an Alkalihydroxid ist mindestens die stöchiometrisch erforderliche Menge, üblicherweise 1 bis 2 Mole, bevorzugterweise 1,1 bis 1,4 Mole.

Das Alkalihydroxid kann in fester Form aber auch in Form einer wäßrigen Lösung eingesetzt werden. Da das Endprodukt Tricyclohexylzinnhydroxid in heißem Methanol löslich, in Wasser jedoch unlöslich ist, soll die mit dem Alkalihydroxid eingebrachte Wassermenge nicht zu groß sein. Üblicherweise wird nun das wäßrige Alkalihydroxid als 5 %ige bis 50%ige, bevorzugterweise als 30 - 50%ige wäßrige Lösung eingesetzt, wodurch bereits ein Teil des gebildeten Alkalihalogenids in Lösung ist. Die Verseifung erfolgt bei erhöhter Temperatur, üblicherweise bei etwa 45 - 65°C, jedoch sind auch höhere Temperaturen und die Anwendung von Druck möglich. Die Reaktionszeit ist abhängig von der Temperatur und beträgt 1 bis 10, bevorzugterweise 2 -5 Stunden. Nach beendeter Reaktion wird noch in der Wärme, bevorzugt bei Reaktionstemperatur, von Dicyclohexylzinnoxid und von Tetracyclohexylzinn sowie gegebenenfalls von gebildetem Alkalihalogenid abfiltriert.

Anschließend wird das Tricyclohexylzinnhydroxid mit Wasser ausgefällt, indem die methanolische Lösung in Wasser, beispielsweise in die 0,5 bis 2fache Wassermenge, bezogen auf die eingesetzte Methanolmenge, bei etwa 0 - 30°C, bevorzugt bei Raumtemperatur, eingetragen wird. Die Isolierung des Produktes erfolgt in üblicher Weise, beispielsweise durch Filtrieren, Neutralwaschen und Trocknen.

Da das erfindungsgemäße Verfahren keinen Rekristallisationsschritt enthält und die Verseifung in Methanol schonend und ohne zusätzliche Nebenproduktbildung erfolgt, wird das Tricyclohexylzinnchlorid praktisch vollständig in Tricyclohexylzinnhydroxid umgewandelt. Die Ausbeute an reinem Tricyclohexylzinnhydroxid beträgt, wie die Beispiele zeigen, bezogen auf eingesetztes reines Tricyclohexylzinnchlorid, über 95 bis 97 %. Die Reinheit des isolierten Produktes beträgt dabei über 96 bis 97 %, bestimmt durch potentiometrische Titration.

In den beiden Vergleichsbeispielen wurde Tricyclohexylzinnchlorid nach bisherigem Stand der Technik in Xylol oder im Lösungsmittelgemisch Toluol/ Tetrahydrofuran gelöst, mit wäßriger Natronlauge verseift und nach Phasentrennung das organische Lösungsmittel verdampft (Beispiel 3) bzw. das organische Lösungsmittelgemisch nach DE-OS 3023149 durch Wasserdampfdestillation entfernt (Beispiel 4). In beiden Fällen wurde nach der Verseifung ein Tricyclohexylzinnhydroxid mit geringerer Reinheit (87,5 bzw. 88,1 %) und in geringerer Ausbeute (89,1 bzw. 88,2 %, bezogen auf eingesetztes reines Tricyclohexylzinnchlorid, erhalten.

Beispiel 1:

41 g technisches Tricyclohexylzinnchlorid, welches 3,4 % Dicyclohexylzinndichlorid, 91,0 % Tricyclohexylzinnchlorid und 5,6 % Tetracyclohexylzinn enthält, wurden in 250 ml Methanol suspendiert, mit 22 g 50 %iger NaOH versetzt und 3 Stunden bei 60°C gerührt. Anschließend wurden 5 g Filterhilfsmittel dazugegeben und bei 60°C filtriert. Das Filtrat wurde in 400 ml Wasser eingerührt und die entstehende Suspension auf 20°C gehalten. Der Feststoff wurde abfiltriert, mit Wasser neutral gewaschen und getrocknet. Die Ausbeute betrug 35,7 g Feststoff mit einem Gehalt von 97 % Tricyclohexylzinnhydroxid, 2,3 % Dicyclohexylzinnoxid und 0,7 % Tetracyclohexylzinn, entsprechend einer Ausbeute an reinem Tricyclohexylzinnhydroxid von 97,2 % der Theorie.

Beispiel 2:

76 g Tricyclohexylzinnchlorid mit gleicher Qualität wie in Beispiel 1 wurden in 250 ml Methanol suspendiert, mit 10,7 g fester NaOH versetzt und 3 Stunden bei 60°C gerührt. Anschließend wurden 5 g Filterhilfsmittel zugegeben und vom Feststoff bei 60°C abfiltriert. Das Filtrat wurde in 400 ml Wasser eingerührt und die entstehende Suspension bei 20°C gehalten. Der Feststoff wurde abfiltriert, mit Wasser neutral gewaschen und getrocknet. Die Ausbeute betrug 65,7 g Feststoff mit einem Gehalt von 96,8 % Tricyclohexylzinnhydroxid, 2,3 % Dicyclohexylzinnoxid und 0,9 % Tetracyclohexylzinn, entsprechend einer Ausbeute an reinem Tricyclohexylzinnhydroxid von 96,6 % der Theorie.

Beispiel 3 (Vergleichsbeispiel):

80 g Tricyclohexylzinnchlorid mit gleicher Qualität wie in Beispiel 1 wurden in 350 ml Xylol gelöst, mit 18 g 50 %iger Natronlauge versetzt und 1,5 Stunden bei 85°C gerührt. Anschließend wurde 1 Stunde auf Rückfluß gehalten. Nach Zugabe von 38 ml Wasser wurden bei 70°C die Phasen getrennt. Von der organischen Phase wurden Spuren Feststoff durch Filtration abgetrennt, anschließend wurde sie zur Trockene eingedampft. Der erhaltene Feststoff wurde mit Wasser gewaschen und getrocknet. Die Ausbeute betrug 70,6 g Feststoff mit einem Gehalt von 87,5 % Tricyclohexylzinnhydroxid, 6,9 % Dicyclohexyl zinnoxid und 5,6 % Tetracyclohexylzinn, entsprechend einer Ausbeute an reinem Tricyclohexylzinnhydroxid von 89,1 % der Theorie.

Beispiel 4 (Vergleichsbeispiel):

96 g Tricyclohexylzinnchlorid mit gleicher Qualität wie in Beispiel 1 wurden in 308 ml Toluol und 42 ml Tetrahydrofuran gelöst, mit 64 g 15 %iger NaOH versetzt und 1 Stunde bei 70°C gerührt. Nach Abtrennung der wäßrigen Phase wurde die organische Phase filtriert und anschließend das Lösungsmittelgemisch durch Wasserdampfdestillation entfernt. Die so erhaltene wäßrige Suspension wurde filtriert. Der Feststoff wurde gewaschen und getrocknet, die Ausbeute betrug 83,5 g Feststoff mit einem Gehalt von 88,1 % Tricyclohexylzinnhydroxid, 5,7 % Dicyclohexylzinnoxid und 6,1 % Tetracyclohexylzinn, entsprechend einer Ausbeute an reinem Tricyclohexylzinnhydroxid von 88,2 % der Theorie.

**Ansprüche**

1. Verfahren zur Herstellung von hochreinem Tricyclohexylzinnhydroxid durch Verseifen von technischem Tricyclohexylzinnhalogenid, dadurch gekennzeichnet, daß das technische Tricyclohexylzinnhalogenid in Methanol suspendiert und 1 bis 10 Stunden mit gegebenenfalls wäßrigem Alkalihydroxid erwärmt wird, worauf von vorhandenem Feststoff in der Hitze abfiltriert und das in Lösung befindliche Tricyclohexylzinnhydroxid mit Wasser ausgefällt und anschließend in üblicher Weise isoliert wird.

2. Verfahren nach Anspruch 1, dadurch gekennzeichnet, daß als Tricyclohexylzinnhalogenid das Tricyclohexylzinnchlorid eingesetzt wird.

3. Verfahren nach den Ansprüchen 1 und 2, dadurch gekennzeichnet, daß die Verseifung mit fester NaOH erfolgt.

4. Verfahren nach den Ansprüchen 1 und 2, dadurch gekennzeichnet, daß die Verseifung mit 5 bis 50%iger wäßriger NaOH erfolgt.

5. Verfahren nach den Ansprüchen 1 bis 4, dadurch gekennzeichnet, daß die Verseifung bei 40 - 65°C erfolgt.

6. Verfahren nach den Ansprüchen 1 bis 5, dadurch gekennzeichnet, daß die Reaktionszeit 2 - 5 Stunden beträgt.

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A-2 189 415 (OXON ITALIA S.p.A.) <br> * Beispiel 4 * | 1-6 | C 07 F 7/22 |
| X | US-A-3 923 998 (M.H. GITLITZ) <br> * Beispiel 2 * | 1-6 | |
| X | DE-A-2 032 756 (UCB) <br> * Ansprüche; Beispiele 1,4 * | 1-6 | |

RECHERCHIERTE SACHGEBIETE (Int Cl 4)

C 07 F 7/00

Der vorliegende Recherchenbericht wurde für alle Patentansprüche erstellt.

| Recherchenort <br> DEN HAAG | Abschlußdatum der Recherche <br> 07-01-1986 | Prüfer <br> PAUWELS G.R.A. |
|---|---|---|